# EUROPEAN PATENT SPECIFICATION

(11) **EP 4 584 732 B1**
(45) Date of publication and mention of the grant of the patent: **11.11.2026**
(21) Application number: 23762546.2
(22) Date of filing: 06.09.2023
(51) Int. Cl.: G06Q 10/0631, G06Q 50/04

(54) **METHOD FOR PLANNING A PRODUCTION PROCESS**
VERFAHREN ZUR PLANUNG EINES PRODUKTIONSPROZESSES
PROCÉDÉ DE PLANIFICATION D'UN PROCESSUS DE PRODUCTION

(30) Priority: 06.09.2022 EP 22194086
(43) Date of publication of application: 16.07.2025
(73) Proprietor: BASF SE, 67056 Ludwigshafen am Rhein (DE)
(72) Inventor: SCHWABE, Henning, 67056 Ludwigshafen am Rhein (DE); WOLLNY, Andreas, 67056 Ludwigshafen am Rhein (DE); VINAS, Rafael Selvaggio, 09844-900 Sao Bernado do Campo (BR); BADRI, Tara, Florham Park, New Jersey 07932 (US); GRAF, Nicole, 67061 Ludwigshafen am Rhein (DE)
(74) Representative: BASF IP Association
(86) International application number: PCT/EP2023/074454
(87) International publication number: WO 2024/052407

(56) References cited:
- EP-A1- 3 644 205
- US-A1- 2019 037 012
- ASSAQTY MOHAMMAD IQBAL SARYUDDIN ET AL: "Private-Blockchain-Based Industrial IoT for Material and Product Tracking in Smart Manufacturing", IEEE NETWORK, IEEE SERVICE CENTER, NEW YORK, NY, US, vol. 34, no. 5, 18 September 2020 (2020-09-18), pages 91 - 97, XP011809942, ISSN: 0890-8044, [retrieved on 20200917], DOI: 10.1109/MNET.011.1900537
- ZHANG DAWEN ET AL: "A Process Adaptation Framework for Blockchain-Based Supply Chain Management", 2021 IEEE INTERNATIONAL CONFERENCE ON BLOCKCHAIN AND CRYPTOCURRENCY (ICBC), IEEE, 3 May 2021 (2021-05-03), pages 1 - 9, XP033931654, DOI: 10.1109/ICBC51069.2021.9461106

## Description

### FIELD OF INVENTION

The invention relates to a computer implemented method, an apparatus and a computer program product for planning a production process.

### BACKGROUND OF THE INVENTION

Planning a production process today often involves planning the production of a plurality of products, in particular, pre-products that are produced in different production entities. Such production entities can be part of the same industrial compound, but can also be located at completely different locations. Thus, planning a production process, in particular, optimizing a production process, for example, with respect to one or more resources consumed during the production process of a product, is a complex task not only involving planning an end stage of the production, for instance, a finally assembly stage of a product from pre-products, but also the planning of production processes of the pre-products. For example, it does often not make sense to plan a resource preserving final production process while completely ignoring the resource consumption of the production processes of the pre-products that are utilized for producing the final product. However, such production process does not only have to be planned but also have to be controlled. In particular, since a plurality of entities are involved in the production of the final product it can be difficult to control that indeed all entities fulfil the predetermined production plans, in particular, with respect to resource consumption, and to re-plan the production process if deviations from a respective plan are observed. Thus, providing a method that allows for efficient, i.e. secure, controlling and, if necessary, optimizing of production processes would be advantageous.

The patent application published as US 2019/037012 A1 describes a production system controllable by means of a peer-to-peer application.

### SUMMARY OF THE INVENTION

It is an object of the present invention to provide a computer implemented method, apparatus and computer program product that allow to improve a production planning, in particular, with respect to a more efficient controlling and re-planning of a production process.

In a first aspect of the invention a computer implemented method for planning of a production process is presented, wherein the production process refers to the production of a product based on a pre-product, wherein the pre-product and the product are produced by different production entities, wherein the method comprises a) providing product planning data for the product with respect to the production entity producing the product, wherein the product planning data is indicative of one or more aspects of a production plan of the product that should be fulfilled during the production process of the product, b) providing pre-product planning data for the pre-product with respect to the production entity producing the pre-product, wherein the pre-product planning data is indicative of one or more aspects of a production plan of the pre-product that should be fulfilled during the production process of the pre-product, c) storing the product planning data and the pre-product planning data on a sequential distributed database, d) determining a product status of the production process of the product by comparing the product planning data stored on the sequential distributed database with blockchain oracle data of the production process, e) determining a pre-product status of the production process of the pre-product by comparing the pre-product planning data stored on the sequential distributed database with blockchain oracle data of the production process, and f) validating the product status with respect to the pre-product status.

Since the product planning data and the pre-product planning data are stored on a sequential distributed database and compared with blockchain oracle data for determining a product status and a pre-product status, respectively, wherein the product status and the pre-product status can be validated with respect to each other, the production process and the pre-production process can be controlled, in particular, it can be determined whether the determined aspects of the production process and the pre-production process are fulfilled during the production process and the pre-production process. Moreover, the sequential distributed database and the blockchain oracle process provide an increased security, in particular, with respect to avoiding manipulations of the controlling. Further, the validation of the product status with respect to the pre-product status allows to determine where a respective deviation from the product plan occurs and, if necessary to re-plan the production and/or pre-production processes based on the validation. Accordingly, production processes can be optimized and controlled more easily, in particular, with respect to decreasing resource consumption.

Generally, the computer implemented method can be performed by any hardware and/or software and on any general or dedicated computer. For example, the computer implemented method can be performed by a computer or a network of computers comprising one or more processors by running a respective computer program. The computer implemented method generally allows for a planning of a production process, wherein the production process refers to a production of a product based on a pre-product. In particular, the production of the product can also be based on a plurality of pre-products. Preferably, the production process refers to a recycling process, in which at least parts of the product are, during respective recycling processes, again processed into pre-products that again can be used for producing the product. The product to be produced can refer to any product that is produced utilizing one or more pre-products. For example, the product can refer to a product that after the production is provided to a respective customer for using the product. However, the product itself can also be a pre-product for further products. In particular, the computer implemented method is intended to be utilized for cases in which the product and the pre-products are produced by different and preferably independent, production entities. In this respect an independent production entity refers to a production entity that produces the pre-product completely independent of the later production of the product and/or of the production of other pre-products. Generally, a production entity can refer to any entity that is adapted to produce a product, for instance, an industrial plant or a part of an industrial plant. The production entities, even if independent, can be provided, for instance, on the same compound or in the same production plant. However, the production entities can also be located at far away locations from each other. Moreover, the production entities can be controllable by the same controlling system, for example, by a controlling system controlling all production processes of a compound or of a network of production plants. However, the production entities can also be independent from each other with respect to controlling, i.e. can be controlled without any influence on each other by completely different controlling systems.

In a step the method comprises providing product planning data for the product with respect to the production entity producing the product. In particular, the providing of product planning data can refer to retrieving the product planning data from a storage or to receiving the product planning data, for instance, from an input unit, into which a user can input the product planning data. Generally, the product planning data is indicative of one or more aspects of a production plan of the product that should be fulfilled during the production process of the product. For example, the aspects of the production plan that should be fulfilled can refer to an amount of produced products, an amount of consumed pre-products, an increase or decrease in one or more resources consumed, a timing of the production, etc. Preferably, the product planning data and the pre-product planning data refer to a planned reduction of a resource utilized in the production process and/or to a reduction of waste products generated during the production process. Thus, it is preferred that the one or more aspects refer to a decrease in the consumption of one or more resources and/or to a decrease in a waste production. For example, the product planning data can be indicative of reducing a CO₂ production during the production of the product compared with previous production processes of the same product. In another example the product planning data can be indicative of a reduction of the use of certain plastic materials in the production of the product. Moreover, in an example the product planning data can be indicative of a certain amount of a pre-product that should be consumed during the production process. The product planning data can refer accordingly to any kind of data that allows to derive the respective aspects of the production plan that should be fulfilled during the production process of the product. For example, the product planning data can refer to a recipe or a synthesis specification indicating how a respective product should be produced. However, the product planning data can also directly refer to the one or more aspects that should be fulfilled during the production process of the product. For example, the product planning data can directly comprise a value for the amount of a resource that should be consumed during the production or a value or a value range of an amount of waste that should not be exceeded during the production of the product. The same principles as described above are applicable for the providing of the pre-product planning data. Generally, the pre-product planning data and the product planning data can refer to the same aspects, for example, to the reduced consumption of the same resource, or can refer to completely different aspects, for example, for the reduced consumption of different resources.

In a further step the product planning data and the pre-product planning data are stored on a sequential distributed database. In this context a sequentially distributed database refers to a database on which entries can only be stored and accessed in a sequential order, wherein the storage of the entries is distributed of different networked computers which communicate and coordinate the access to the database. Preferably the sequential distributed database further comprises at least one of the following characteristics append only, immutable, temper evident and temper resistant. In this context, append only refers to a characteristic of the database that new data can be appended to the storage but the existent data is immutable, i.e. cannot be modified after is created. Generally, it is preferred that the sequential distributed database is itself immutable and thus does not allow a changing of data after its creation. Furthermore, it is preferred that the sequential distributed database is temper evident and thus makes it easy to detect if data stored on the database has been accessed or manipulated, for instance, by unauthorized parties. Moreover, it is preferred that the database is temper resistant, i.e. is resistant to manipulations by unauthorized parties. In particular, a plurality of database technologies exist that allow to provide these preferred characteristics. Preferably the sequential distributed database refers to a blockchain database, for example, provided in form of a smart contract. These characteristics of the database allow to save the product planning data and the pre-product planning data in a secure, easily controllable, and trustable environment.

In a further step a product status of a production process of the product is determined by comparing the product planning data stored on the sequential distributed database with blockchain oracle data of the production process. In particular, blockchain oracle data refers to data utilized during a blockchain oracle process. A blockchain oracle process refers to a process that determines and verifies real word occurrences and submits the information on the real word occurrences in form of blockchain oracle data to a sequential distributed database that can be added to the respective sequential distributed database and provide the possibility to verify the product planning data with respect to real word data. In particular, the blockchain oracle data can refer to physical sensor data that is indicative of measurements of one or more quantities of the production process, for example, an amount of emitted CO₂, an amount of generated waste, an amount of consumed pre-products, etc. Moreover, blockchain oracle data can also refer to more complex data, for example, to information provided by certificates, verification or survey processes, licensing processes, etc. Generally, the determination of the product status of the production process of the product can be performed at any time for which blockchain oracle is available, for example, can be performed before, during and after the production process. For example, if a planned production process has undergone a certification process before the production itself indicating that the production process result in the production of a certain amount of CO₂, the product status can be determined before the production has already been started. However, a product status can also be determined during the production, for instance, based on current sensor measurements or after the end of the production process based on the final overall measurements during the production process. Preferably the product status is indicative on whether or not the production plan is fulfilled with respect to the one or more aspects that should be fulfilled at the time of determining the product status. However, the product status can also be more detailed and determine to which extent the production plan is fulfilled or not.

The same principle as described above with respect to the product status can be applied to the determination of the pre-product status. Thus, already based on the product status and the pre-product status it can be determined whether or not a production plan for the product and/or pre-product is fulfilled with respect to the one or more aspect that should be fulfilled.

In a final step the method comprises then validating the product status with respect to the pre-product status. The validation of the product status with respect to the pre-product status can be performed with respect to one or more rules for the validation. In particular, the validation comprises comparing the product status with the pre-product status to determine whether the production process of the product, the production process of the pre-product or both fulfil or not fulfil the aspects of the production plan that should be fulfilled. Based on this comparison the validating can comprise providing a respective validation result based on predetermined rules. For example, the rules can indicate that if one of the production processes of either the product or pre-product does not fulfil the production plan with respect to the one or more aspects that should be fulfilled, that the whole production process of the product is invalid, for example, should be re-planned. However, the validation rules can also indicate that if both production processes do not fulfil the one or more aspects of the production plan that it might not be possible to fulfil the production plan such that the validation can result in a valid production process. Moreover, even more complex rules for the validation of the product status with respect to the pre-product status can be determined depending on the respective product and pre-product and the respective application context. Preferably the result of the validation is also stored together with the product planning data and the pre-product planning data on a sequential distributed database, in particular, preferred as part of the blockchain of the respective product planning data and pre-product planning data. This allows to trace and comprehend the respective validation result with respect to this production process, preferably in a publicly available manner.

In an embodiment, the method further comprises generating control data for controlling a production process of the product and/or pre-product based on the validation of the product status with respect to the pre-product status. In particular, the controlling of the production process can refer to controlling the production process such that one or more production parameter are amended during the production process or for the next production process. For example, if the production process is a batch production process, and if at the time of the validation a first batch of a product has been already produced, the controlling can refer to controlling the production process of the next batch of the product. However, if the production process refers to a continuous production processes, the controlling can refer to controlling the production process such that after the validation the production process is resumed, for example, with different production parameters. Generally, if the controlling of the production process comprises an amending of one or more parameters of the production process the controlling can also be regarded as a re-planning of the production process. In particular, it is preferred that the control data is generated that allows to control a production process such that one or more process parameters are changed if the validation of the product status with respect to the pre-product status indicates that at least one of the production processes does not fulfil the aspects that should be fulfilled during the production processes.

In an embodiment, the validating of the product status with respect to the pre-product status comprises determining a balance between the product status and the pre-product status. In particular, the determining of a balance between the product status and the pre-product status can refer to determining to which amount the production of the pre-product and the production of the product fulfil the respective production plan and to determine a difference with respect to this amount for a respective production entity. For example, if the product status and the pre-product status indicate that both production processes do not fulfil the production plan, wherein however the production process of the product fulfils the production plan better than the production process of the pre-product, the determined balance can indicate a positive balance for the product entity since it better fulfils its production plan and a negative balance for the pre-production entity since it does not fulfilling the production plan. Preferably the control data is further generated taking this balance into account indicating, for example, that it is more important to provide control data that change a production process of a production entity with a negative balance than with a positive balance. Preferably the validating of the product status with respect to the pre-product status further comprises distributing validation tokens to the production entities based on the balance. In particular, it is preferred that the distributing of validation tokens comprises adding tokens to a token score of a production entity if the balance indicates that the product status or pre-product status of the production entity fulfils the production or pre-production plan less than the other entity. Utilizing tokens and token scores to keep track on which production entity fulfils or it does not fulfil a production plan compared to another entity allows to easily determine where a change in the production process would be most effective. Moreover, utilizing such a token score system allows for an optimization of the production process with respect to a clearly quantified variable that leads to an overall improvement of production processes with respect to one or more aspects of the production process. Moreover, it is preferred that the control data is further generated based on a token score of a production entity. For example, if for a following production of a batch of a product a respective production entity has to be determined for producing the pre-products the control data might be generated such that pre-products are utilized from production entities that indicate based on the token score that these production entities fulfil respective production plans. Accordingly, token scores allow for an easy re-planning of production processes, if necessary, by indicating production entities with are trustworthy in fulfilling their production plans.

In an embodiment the production and pre-product planning data are stored in form of a chemical product passport comprising a decentral identifier identifying the product and/or pre-product and the product planning data and/or pre-product planning data. The term "decentral identifier" is to be understood broadly in the present case and comprises any unique identifier uniquely associated with the data owner and chemical product data. The decentral identifier may include a Universally Unique IDentifier (UUID) or a Digital IDentifier (DID). The decentral identifier may be issued by a central or decentral identity issuer. The decentral identifier may include authentication information. Via the decentral identifier and its unique association with the data owner and chemical product data access to the chemical product data may be controlled by the data owner. This contrasts with central authority schemes, where identifiers are provided by such central authority and access to data is controlled by such central authority. Decentral in this context refers to the usage of the identifier in implementation as controlled by the data owner. The term "chemical product passport" is to be understood broadly in the present case and comprises a digital representation of chemical product planning data. The digital representation may include a representation for accessing the chemical product planning data or part thereof. The digital representation may include a representation of chemical product planning data or parts thereof. The chemical product passport may also include data related to the chemical product planning data, a public key and the decentral identifier. The data related to the chemical product planning data may include the digital representation of any data that is related to the chemical product planning data.In a further aspect of the invention an apparatus for planning of a production process is presented, wherein the production process refers to the production of a product based on a pre-product, wherein the pre-product and the product are produced by different production entities, wherein the apparatus comprises i) an input unit configured to a) providing product planning data for the product with respect to the production entity producing the product, wherein the product planning data is indicative of one or more aspects of a production plan of the product that should be fulfilled during the production process of the product, b) providing pre-product planning data for the pre-product with respect to the production entity producing the pre-product, wherein the pre-product planning data is indicative of one or more aspects of a production plan of the pre-product that should be fulfilled during the production process of the pre-product, ii) one or more processors configured to a) storing the product planning data and the pre-product planning data on a sequential distributed database, b) determining a product status of the production process of the product by comparing the product planning data stored on the sequential distributed database with blockchain oracle data of the production process, c) determining a pre-product status of the production process of the pre-product by comparing the pre-product planning data stored on the sequential distributed database with blockchain oracle data of the production process, and d) validating the product status with respect to the pre-product status, and iii) an output unit configured to output the validation.

In a further aspect of the invention a computer program product for planning of a production process is presented, wherein the computer program product comprises program code means for causing the apparatus as described above to execute the method as described above.

The method as described above, the apparatus as described above, and the computer program product as described above have similar and/or identical preferred embodiments, in particular, as defined in the dependent claims.

It shall be understood that a preferred embodiment of the present invention can also be any combination of the dependent claims or above embodiments with respective independent claim.

These and other aspects of the invention will be apparent from and elucidated with reference to the embodiments described hereafter.

### BRIEF DESCRIPTION OF THE DRAWINGS

Fig. 1 shows schematically and exemplarily an embodiment of an apparatus for planning of a production process,
Fig. 2 shows schematically and exemplarily a flowchart of an embodiment of a method for planning a production process,
Fig. 3 shows schematically and exemplarily a possible network of production entities utilizing the invention,
Fig. 4 shows schematically and exemplarily possible material flows between production entities, and
Fig. 5 shows schematically and exemplarily a flowchart of a detailed example of a method for planning a production process.

### DETAILED DESCRIPTION OF EMBODIMENTS

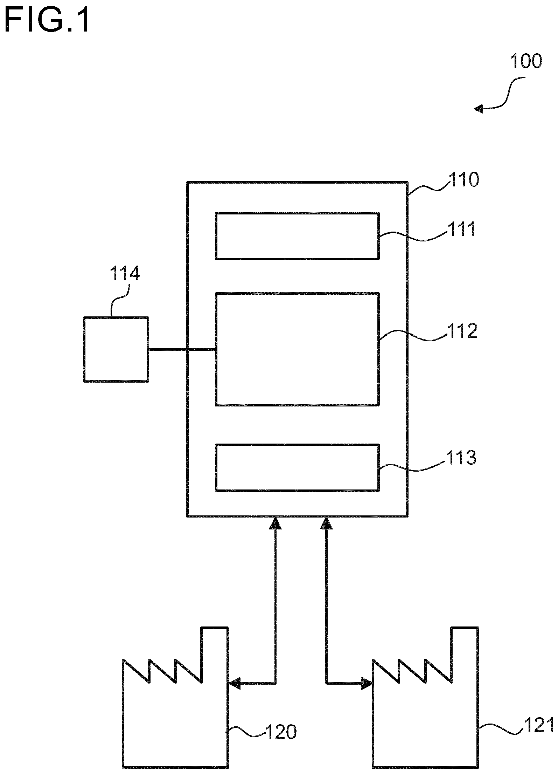

Fig. 1 shows schematically and exemplarily a system 100 comprising a production entity 120 for producing a product. Further, the system 100 can comprise or can be communicatively coupled with one or more production entities symbolized by a production entity 121 producing the one or more pre-products. Generally, the production entities 120 and 121 can be independent production entities that can be located at the same compound or at completely different locations and that can be controlled independent of each other, for example, can be managed by different product vendors. The system 100 further comprises an apparatus 110 that can be part of or communicatively coupled with a production entity 120. Generally, the functions provided by the apparatus 110 can be distributed over a plurality of processors, in particular, can be performed by a network of processors, wherein at least some of these processors can also be part of the production entity 121. Thus, the functions provided by the apparatus 110, and thus the apparatus 110 itself, can be performed by each of the participating production entities but also by one or more third party providers.

The production entities 120, 121 can refer to or be part of an industrial plant. Generally, such an industrial plant can refer to any technical infrastructure that is used for an industrial purpose. An industrial purpose may be manufacturing or processing of one or more industrial products, i.e., a manufacturing process or a processing performed by the industrial plant. Preferably, the industrial purpose refers to the production of a product or pre-product. The product or pre-product can, for example, be any physical product such as a chemical, a biological, a pharmaceutical, a food, a beverage, a textile, a metal, a plastic, or a semiconductor. Additionally or alternatively, the product or pre-product can even be a service product such as electricity, heating, air conditioning, waste treatment such as recycling, chemical treatment such as break-down or dissolution, or even incineration, etc. Accordingly, the industrial plant may be one or more of a chemical plant, a process plant, a pharmaceutical plant, a fossil fuel processing facility such as an oil and/or natural gas valve, a refinery, a petrochemical plant, a cracking plant, and the like. The industrial plant can even be any of a distillery, an incinerator, or a power plant. The industrial plant can even be a combination of any of the examples given above.

For performing a production process, the industrial plant comprises a technical infra-structure which can be controlled by production parameters implemented, for instance, by a process control system into the technical infrastructure. The technical infrastructure may comprise equipment or process units such as any one or more of a heat exchanger, a column such as a fractionating column, a furnace, a reaction chamber, a cracking unit, a storage tank, a precipitator, a pipeline, a stack, a filter, a valve, an actuator, a transformer, a circuit breaker, a machinery, e.g., a heavy duty rotating equipment such as a turbine, a generator, a pulveriser, a compressor, a fan, a pump, a motor, etc. Moreover, the industrial plant typically comprises a plurality of sensors that allow to measure operational parameters of the technical infrastructure. The measured operational parameters can then be stored by a process control system on a database of the industrial plant. Further, the product parameters can also be utilized by the process control system for controlling the production process in the industrial plant. Generally, such measured operational parameter can be utilized as part of the blockchain oracle data.

The apparatus 130 is adapted to control a production process of a product performed by the production entity 110. Preferably, the production process refers to a recycling process in which the pre-products utilized for producing the product are at least partly reused from a previous product. The apparatus 130 comprises a product production data providing unit 131, a pre-production data receiving unit 132, an optimization unit 133, and a production control unit 134. Optionally, the apparatus 130 can further comprise a communication unit 135 for communicating with other apparatuses of other production entities when present.

The apparatus 110 is configured to be utilized for a planning of production processes, for example, for producing one or more of the products mentioned above based at least on one pre-product. The apparatus 110 comprises an input unit 111 that can refer, for example, to a communication interface that allows for a communication between the production entities 120, 121 and the apparatus 110. In particular, the input unit 111 is adapted to receive data and to then provide the data to the one or more processors 112 of the apparatus 110. For example, the data received by the input unit can be received by the production entities 120, 121, but can also refer to data received directly from a user, for example, via a user input interface. The data received by the input unit 111 comprises product planning data and pre-product planning data. The product planning data is provided for a specific product that is to be produced by the production entity 120. Generally, the product planning data is indicative of one or more aspects of a production plan of a product that should be fulfilled during the production process of the product. Also the pre-product planning data is indicative of one or more aspects of a production plan of the pre-product that should be fulfilled during the production of the pre-product. Generally, the one or more aspects of the pre-product and the product can comprise the same aspect that should be fulfilled but can also refer to different aspects. Generally, the aspects can refer to any aspects of the production process. However, in a preferred embodiment the aspects refer to the reduction of resource consumption and the reduction of waste production during the production process of the product and/or pre-product. The such received product planning data and pre-product planning data is then provided by the input unit 111 to the one or more processors 112. The one or more processors 112 are then adapted to store the product planning data and the pre-product planning data on a sequential distributed database 114. In a particularly preferred embodiment the sequential distributed database 114 refers to a blockchain database. Preferably, the sequential distributed database 114, e.g. the blockchain database, is an extended sequential distributed database comprising also a part referring to a non-sequential distributed database, e.g., key value store or wide column store or document store. The product planning data and the pre-product planning data are then preferably stored as separate records on a blockchain on the distributed database. A tamper proof connection between two such sequential distributed database records for a transaction, for instance, for a comparing of the two records comprising the product and pre-product data, is created by generating a hash value of all data pertaining to the records and writing the hash value as data to the blockchain entry of the records and/or transaction. Generally, a transaction can comprise database operation commands, database keys, and/or data and metadata access. Compared to conventional blockchain used "as database" the above described extended sequential distributed database allows to flexibly decide at run-time which data of the above mentioned should be stored in a sequential distributed form, e.g. in a blockchain, and which should be stored in the non-distributed database. Preferably, he product planning data and the pre-product planning data can then be stored, for example, in form of a blockchain based smart contract. The such stored product planning data and pre-product planning data are thus stored in a manipulation-free manner and can accordingly be utilized securely in further validation processes. The one or more processors 112 are then configured to determine a product status and a pre-product status. For example, this part of the functions of the apparatus 110 can be performed by processes provided by the production entities 120, 121 having access to a sequentially distributed database 114 storing the product planning data and the pre-product planning data. However, the one or more processors performing the determination of the product status and the pre-product status can also be provided independent from the production entities 120, 121, for example, by an independent provider. The product status of the production process of the product produced by the production entity 120 is determined by comparing the product planning data from the sequential distributed database 114 with blockchain oracle data of the production process. The pre-product status of the production process of the pre-product produced by the production entity 121 is determined accordingly by comparing the pre-product planning data stored on the sequential distributed database 114 with blockchain oracle data of the production process of the pre-product. In this context the blockchain oracle data can be understood as real world data indicative of a real world performed production processes. For example, blockchain oracle data can comprise sensor measurements performed during the respective production process by the production entities 120, 121. However, blockchain oracle data can also refer to verification data or certificate data determined during verification or certification processes performed before, during or after the production process of the product and/or pre-product. Thus, also the determination of the product status and the pre-product status can be performed at different times before during and after the production of the product and/or pre-product, respectively, with different blockchain oracle data. Generally, it is preferred that a product status and a pre-product status are determined at predetermined times before during and after the production process wherein at each time the respective available blockchain oracle data is utilized for the determination of the product status and/or pre-product status, respectively. In particular, it is preferred that the predetermined times at which the product status and the pre-product status are determined a determined based on whether the production of a product or pre-product refers to a batch production or continuous production. For example, if the production of the product or pre-product refers to a batch production it can be predetermined that the product status or pre-product status is determined after the complete batch of the product or pre-product has been produced. If the production process of a product or pre-product refers to a continuous production it can be predetermined that the product status or the pre-product status is determined after at least some of the products or pre-products, in particular, a statistically relevant amount, have already been produced.

The product status and the pre-product status are then indicative for whether or not the respective production entity has fulfilled the one or more aspects that should be fulfilled with respect to the product planning data or the pre-product planning data, respectively. For example, a product status or pre-product status can refer to a simple indicator, for example, a plus or minus, indicating that the comparison of the product planning data and the blockchain oracle data or the comparison of the pre-product planning data and the blockchain oracle data, respectively, indicates that the planned aspects have been fulfilled or not. For instance, if the product planning data refers to reduction of a CO₂ production during the production of the product over 10% compared with a standard production process and CO₂ sensors in the production entity 120 indicate a respective CO₂ value that refers to such a 10% reduction the product status can indicate that the respective aspect has been fulfilled. However, the product status and the pre-product status are preferably indicative not only on whether one or more aspects have been fulfilled or not, but further to which extent these aspects have been fulfilled or not. In this case using the same example as above, the product status can indicate that the aspect of the 10% CO₂ reduction has even been fulfilled more than necessary, for instance, with an overfulfilment of 5% CO₂ reduction leading to an overall CO₂ reduction of 15%.

The one or more processors 112 are then adapted to validate the product status with respect to the pre-product status. In particular, the validation can refer to comparing the product status with a pre-product status and to determine which of the production entities has fulfilled its production plan with respect to the one or more previously predetermined aspects. The validation can thus refer to output a signal that indicates simply whether or not both production entities 120, 121 have fulfilled their production plan as stored on the sequential distributed database. However, the validation can also refer to a more complex process. For example, a balance between the product status and the pre-product status can be determined. In this case a quantity is determined for each of the participating production entities that indicates the performance of the respective production entity in the fulfilling of the production plan with respect to the other production entities. For example, such a balance can be positive for a production entity if the production entity has fulfilled its production plan whereas at least one of the other participating production entities has not fulfilled its production plan. The balance can be neutral for the production entity if either all production entities have fulfilled the production plan or none of them has fulfilled their production plan and it can be negative if the production entity has not fulfilled its production plan whereas other production entities have fulfilled their production plan. However, the balance can also be determined more complex in particular if the product status and the pre-product status provide a quantification of the fulfilment or not fulfilment of the production plan. In these cases a more complex set of rules can be determined for determining a respective balance.

An output unit 113 can then output the results of the validation, for instance can output the balance and/or also the product and pre-product status, for example, to an output unit for visualization to a user. However, in a preferred embodiment the output unit 113 provides a validation result such that it can be processed further, for example, to a control unit for generating control data for controlling a production process of the product and/or pre-product based on the validation result. For example, such control data can be generated in case that the validation result refers to a negative balance for a production entity in order to amend the production process such that the negative balance can be shifted to at least a neutral or a positive balance, in particular, by better fulfilling the predetermined production plan. Generally, in case of a batch production the control data can be generated such that it controls the production process of the next batch produced of the same products. For example, one or more process parameters can be changed for the next batch of the same products in order to achieve better results during the validation process. Moreover, the control data can also refer to changing a production entity for producing a product, in particular, for changing a production entity for producing a pre-product of the product by utilizing another production entity that might be suited better for fulfilling a respective production plan.

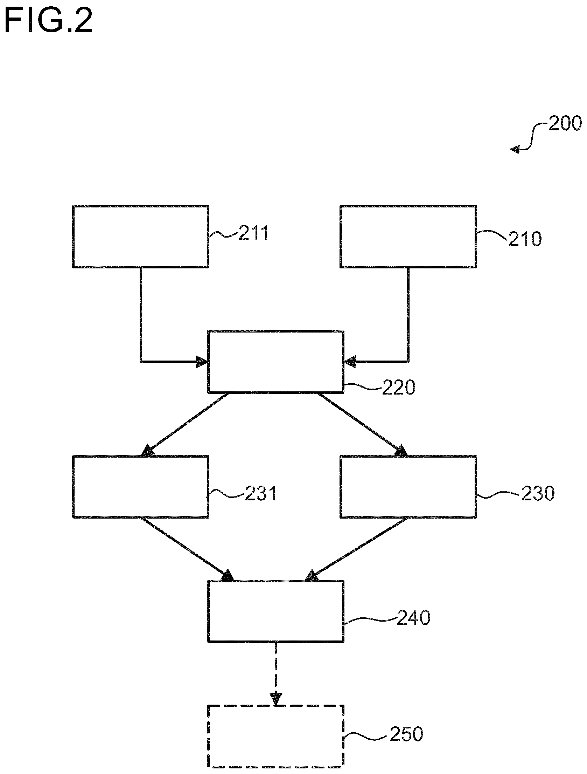

Fig. 2 shows schematically and exemplarily an embodiment of a computer implemented method 200 for planning a production process, wherein the method can be performed, for example, in accordance with the principles described with respect to the apparatus 110 shown in Fig. 1. The method 200 comprises providing 211 product planning data and providing 210 pre-product planning data. Further, the method 200 comprises storing 220 the product planning data and the pre-product planning data on a sequential distributed database, preferably, in form of a blockchain database. Moreover, in step 231 and step 230 a product status and a pre-product status, respectively are determined. In particular, the product status is determined by comparing the product planning data with blockchain oracle data and the pre-product status is determined by comparing pre-product planning data with blockchain oracle data. In step 240 the product status and the pre-product status are then validated with respect to each other. Preferably, in an optional step 250 the result of the validation is utilized for generating control data for controlling a production process of the product and/or pre-product.

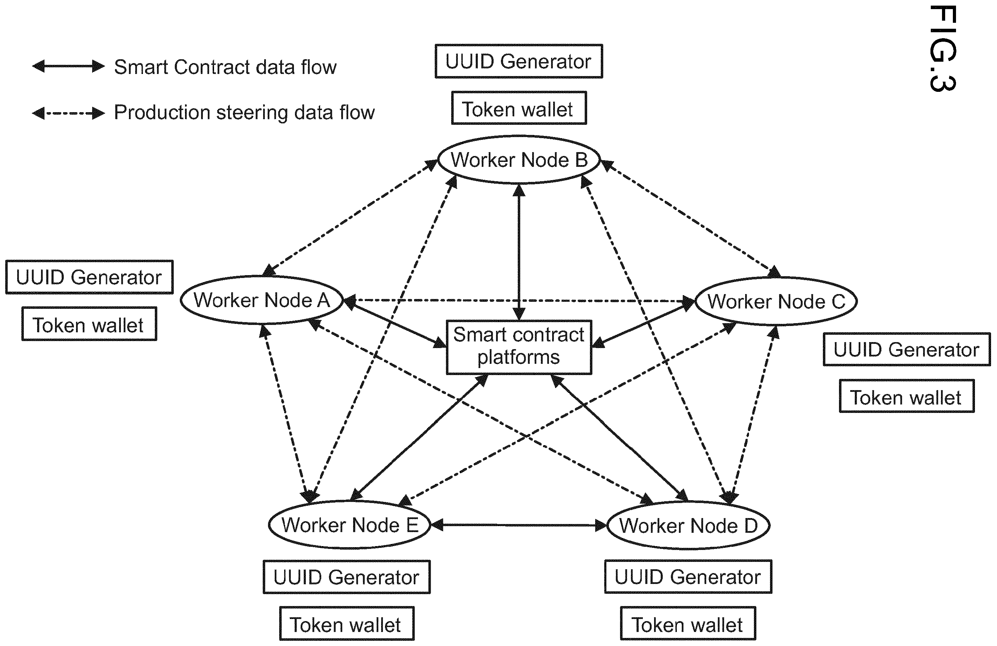

Fig. 3 shows schematically and exemplarily a possible network of production entities utilizing the invention. In particular, each worker node shown in Fig. 3 can refer to one or more production entities producing a product that can itself again be utilized as pre-product for a product of another worker node. In particular, it is preferred that the worker nodes, i.e. the production entities, are connected in a recycling process in which at least some of the waste of one worker node can be utilized as pre-product for producing a product of another worker node. Preferably each worker node and thus each production entity comprises its own product passport generator and its own token wallet. Generally, it is preferred that the product planning data and/or pre-product planning data of a worker node is provided to other worker nodes and thus to other production entities in form of a product passport comprising a decentral identifier identifying the product and/or pre-product. The decentral identifier preferably refers to a UUID or a DID. The passport generator can thus be regarded as the providing unit for providing the product planning data and/or pre-product planning data, respectively. In preferred embodiments a balance for validating a product status with respect to a pre-product status for a worker node is quantified in form of tokens that can be added or subtracted from a token wallet provided by the respective worker node. Utilizing such tokens for quantifying the balance allows to easily trace and quantify respective contributions of worker nodes to the fulfilment of production plans.

All worker nodes are communicatively coupled to a smart contract platform, for example, to an independent provider that provides in this example the sequential distributed database in form of a smart contract database and further provides based on the smart contract database a platform for also providing the other functions for validating the production process of the worker nodes as described with respect to the apparatus 110 of Fig. 1. For example, the smart contract platform can also provide the functions for determining the product status and/or pre-product status for a worker node and further the function for validating the respective product status and pre-product status of the worker nodes with respect to each other for determining the balance. Moreover, the platform can then, based on the balance, determine whether tokens have to be added or subtracted from the respective token wallet of a worker node.

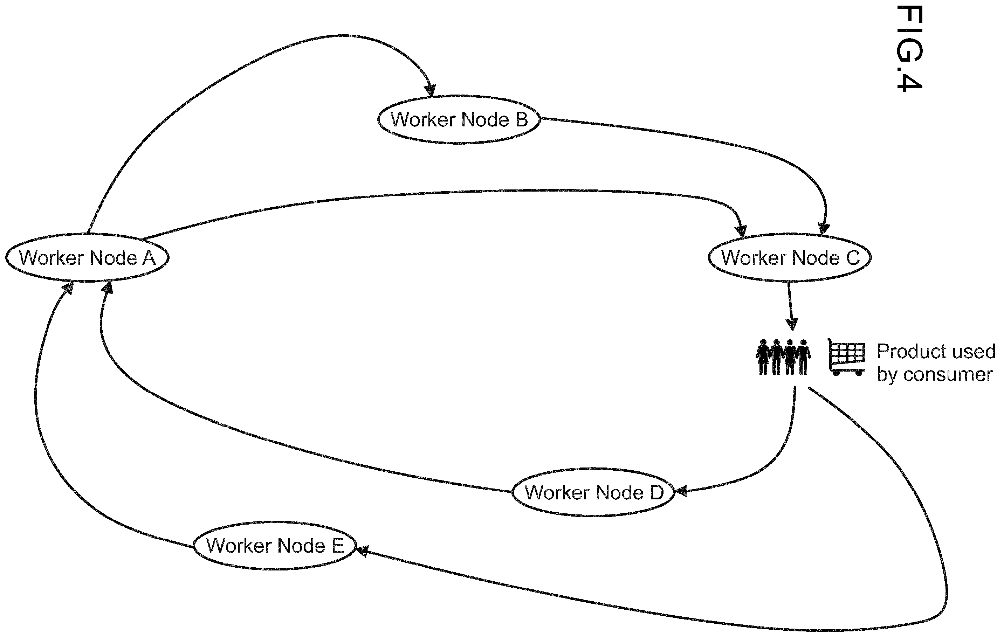

Fig. 4 shows schematically and exemplarily material flows between different worker nodes, i.e. production entities. In particular, Fig. 4 illustrates the often complex relationships between different worker notes, i.e. production entities that allow to provide a product that can be used by consumers. In particular, the illustrated material flow refers to a recycling material flow in which at least part of the waste generated by the consumer by consuming the product is again utilized as product or pre-product for the production of one or more products of one or more worker nodes. Generally, also such more complex relationships can be mapped by the validation process as described above. In particular, it becomes possible to determining the respective product and pre-product statuses of the different worker nodes and by providing respective rules for the validation of the respective statuses with each other to determine where in the respective supply chain of the worker nodes respective production plans have been fulfilled or not. Thus, for instance, in such a supply chain it can be determined if there are worker nodes that never fulfil a production plan and do not amend their production for future fulfilment of the production plan, wherein it then becomes possible for other worker nodes to avoid such worker nodes in their own supply chain in order to increase their own credibility and fulfil their own production plans. Moreover, the respective validation processes can also be made easily available for an increased consumer visibility of worker nodes and whether they fulfil their production plans.

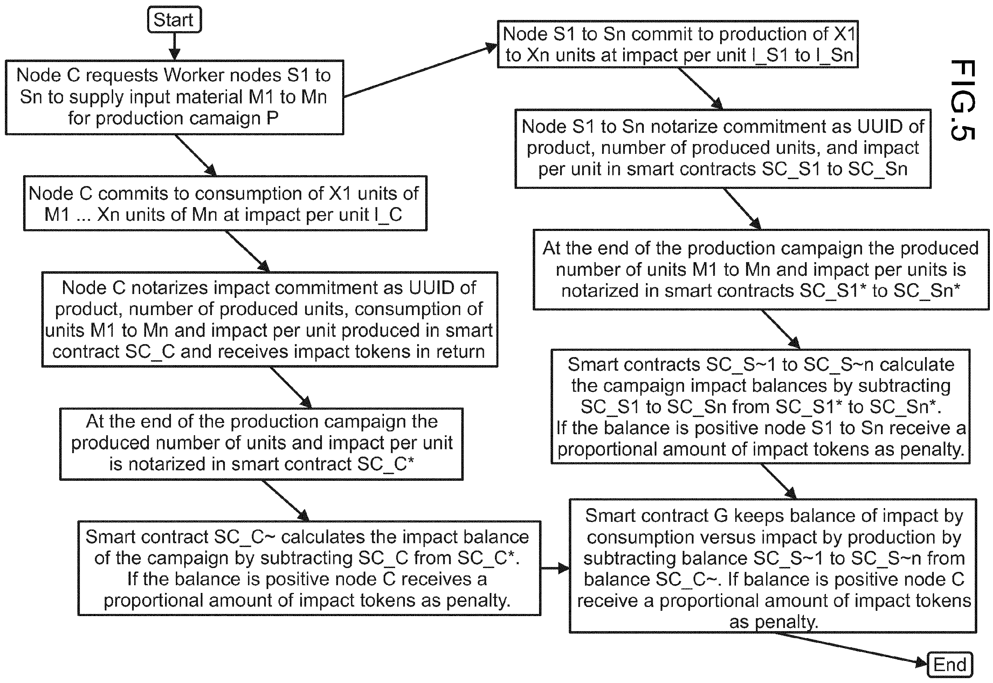

Fig. 5 shows schematically and exemplarily a detailed example of an application of the method for planning a production process as described above. In this example a worker node, i.e. production entity C, requests from other worker nodes here production entities S1 to Sn to supply material, i.e. pre-products, M1 to Mn for production of a product P. In this context the worker nodes S1 to Sn provide pre-product planning data that indicates to produce the respective pre-products with a predetermined environmental impact, for example, with a predetermined CO₂ output per pre-product unit. Thus, the provided pre-product production plan can refer to a commitment of nodes S1 to Sn to the respective environmental impact. In this example the respective production entity node C itself provides as product planning data to utilize a specific amount of the respective pre-products for producing the product also with a predetermined impact per unit of the product, for example, with a certain CO₂ output per unit of produced product. Thus, in this example all production entities commit to a specific production plan that comprises a specific resource or environmental impact per unit produced product. The respective commitments, i.e. the product planning data and the pre-product planning data, are then stored as product passport in form of smart contracts in this example. In this case at the end of the production campaign, thus after the final product has been produced based on the pre-products, respective oracle data is provided, for example, in this case in form of respective measurements of the impact per unit produced product or pre-product and also stored as part of the respective smart contract for the respective product or pre-product. Moreover, the such determined oracle data is then utilized for determining a product status and pre-product status for each of the respective pre-products. In particular, for this case the pre-product statuses are determined as impact balances by subtracting the committed impact from the measured impact and determine whether or not the respective balance is positive or negative for determining the pre-product status. Accordingly, also for the product in this case a respective impact balance is determined by subtracting the measured impact to the production from the committed impact and determining whether the respective commitment has been fulfilled. It is preferred that in this example, based on the respective product status and pre-product status, the production entities, i.e. worker nodes, are provided with tokens quantifying the determined product status and/or pre-product status. Based on the such determined product status and pre-product statuses in a last step the respective statuses are validated. In particular, a balance of impact is determined in this case as a balance of impact by a consumption versus an impact by a production by subtracting the respective determined statuses for the pre-products from the status of the product. Wherein in this case the rules for validating indicate that if the balance is positive the worker node producing the product is punished by receiving a respective amount of impact tokens indicating that the worker node producing the product has not fulfilled its production plan. However, in other examples also other rules for validating and determining respective balances can be utilized depending on the respective application context.

Other variations to the disclosed embodiments can be understood and effected by those skilled in the art in practicing the claimed invention, from a study of the drawings, the disclosure, and the appended claims.

For the processes and methods disclosed herein, the operations performed in the processes and methods may be implemented in differing order. Furthermore, the outlined operations are only provided as examples, and some of the operations may be optional, combined into fewer steps and operations, supplemented with further operations, or expanded into additional operations without detracting from the essence of the disclosed embodiments.

In the claims, the word "comprising" does not exclude other elements or steps, and the indefinite article "a" or "an" does not exclude a plurality.

A single unit or device may fulfill the functions of several items recited in the claims. The mere fact that certain measures are recited in mutually different dependent claims does not indicate that a combination of these measures cannot be used to advantage.

Procedures like the providing of product planning data and pre-product planning data, the determining of the product status and pre-product status, the validating of the product status and the pre-product status, etc. performed by one or several units or devices can be performed by any other number of units or devices. These procedures can be implemented as program code means of a computer program and/or as dedicated hardware.

A computer program product may be stored/distributed on a suitable medium, such as an optical storage medium or a solid-state medium, supplied together with or as part of other hardware, but may also be distributed in other forms, such as via the Internet or other wired or wireless telecommunication systems.

Any units described herein may be processing units that are part of a classical computing system. Processing units may include a general-purpose processor and may also include a field programmable gate array (FPGA), an application specific integrated circuit (ASIC), or any other specialized circuit. Any memory may be a physical system memory, which may be volatile, non-volatile, or some combination of the two. The term "memory" may include any computer-readable storage media such as a non-volatile mass storage. If the computing system is distributed, the processing and/or memory capability may be distributed as well. The computing system may include multiple structures as "executable components". The term "executable component" is a structure well understood in the field of computing as being a structure that can be software, hardware, or a combination thereof. For instance, when implemented in software, one of ordinary skill in the art would understand that the structure of an executable component may include software objects, routines, methods, and so forth, that may be executed on the computing system. This may include both an executable component in the heap of a computing system, or on computer-readable storage media. The structure of the executable component may exist on a computer-readable medium such that, when interpreted by one or more processors of a computing system, e.g., by a processor thread, the computing system is caused to perform a function. Such structure may be computer readable directly by the processors, for instance, as is the case if the executable component were binary, or it may be structured to be interpretable and/or compiled, for instance, whether in a single stage or in multiple stages, so as to generate such binary that is directly interpretable by the processors. In other instances, structures may be hard coded or hard wired logic gates, that are implemented exclusively or near-exclusively in hardware, such as within a field programmable gate array (FPGA), an application specific integrated circuit (ASIC), or any other specialized circuit. Accordingly, the term "executable component" is a term for a structure that is well understood by those of ordinary skill in the art of computing, whether implemented in software, hardware, or a combination. Any embodiments herein are described with reference to acts that are performed by one or more processing units of the computing system. If such acts are implemented in software, one or more processors direct the operation of the computing system in response to having executed computer-executable instructions that constitute an executable component. Computing system may also contain communication channels that allow the computing system to communicate with other computing systems over, for example, network. A "network" is defined as one or more data links that enable the transport of electronic data between computing systems and/or modules and/or other electronic devices. When information is transferred or provided over a network or another communications connection, for example, either hardwired, wireless, or a combination of hardwired or wireless, to a computing system, the computing system properly views the connection as a transmission medium. Transmission media can include a network and/or data links which can be used to carry desired program code means in the form of computer-executable instructions or data structures and which can be accessed by a general-purpose or special-purpose computing system or combinations. While not all computing systems require a user interface, in some embodiments, the computing system includes a user interface system for use in interfacing with a user. User interfaces act as input or output mechanism to users for instance via displays.

Those skilled in the art will appreciate that at least parts of the invention may be practiced in network computing environments with many types of computing system configurations, including, personal computers, desktop computers, laptop computers, message processors, hand-held devices, multi-processor systems, microprocessor-based or programmable consumer electronics, network PCs, minicomputers, mainframe computers, mobile telephones, PDAs, pagers, routers, switches, datacenters, wearables, such as glasses, and the like. The invention may also be practiced in distributed system environments where local and remote computing system, which are linked, for example, either by hardwired data links, wireless data links, or by a combination of hardwired and wireless data links, through a network, both perform tasks. In a distributed system environment, program modules may be located in both local and remote memory storage devices.

Those skilled in the art will also appreciate that at least parts of the invention may be practiced in a cloud computing environment. Cloud computing environments may be distributed, although this is not required. When distributed, cloud computing environments may be distributed internationally within an organization and/or have components possessed across multiple organizations. In this description and the following claims, "cloud computing" is defined as a model for enabling on-demand network access to a shared pool of configurable computing resources, e.g., networks, servers, storage, applications, and services. The definition of "cloud computing" is not limited to any of the other numerous advantages that can be obtained from such a model when deployed. The computing systems of the figures include various components or functional blocks that may implement the various embodiments disclosed herein as explained. The various components or functional blocks may be implemented on a local computing system or may be implemented on a distributed computing system that includes elements resident in the cloud or that implement aspects of cloud computing. The various components or functional blocks may be implemented as software, hardware, or a combination of software and hardware. The computing systems shown in the figures may include more or less than the components illustrated in the figures and some of the components may be combined as circumstances warrant.

Any reference signs in the claims should not be construed as limiting the scope.

The invention refers to a method for planning of a production process of a product. Product planning data is provided with respect to a production entity producing the product. The product planning data is indicative of a production plan that should be fulfilled. Pre-product planning data is provided with respect to a production entity producing the pre-product. The pre-product planning data is indicative of a production plan that should be fulfilled. The product and pre-product planning data are stored on a sequential distributed database. A product status of the production process of the product is determined by comparing the stored product planning data with blockchain oracle data. A pre-product status of the production process of the pre-product is determined by comparing the stored pre-product planning data with blockchain oracle data. The product status is validated with respect to the pre-product status.

## Claims

1. A computer implemented method (200) for planning of a production process, wherein the production process refers to the production of a product based on a pre-product, wherein the pre-product and the product are produced by different production entities, wherein the method comprises:
- providing (211) product planning data for the product with respect to the production entity producing the product, wherein the product planning data is indicative of one or more aspects of a production plan of the product that should be fulfilled during the production process of the product,
- providing (210) pre-product planning data for the pre-product with respect to the production entity producing the pre-product, wherein the pre-product planning data is indicative of one or more aspects of a production plan of the pre-product that should be fulfilled during the production process of the pre-product,
- storing (220) the product planning data and the pre-product planning data on a sequential distributed database,
- determining (230) a product status of the production process of the product by comparing the product planning data stored on the sequential distributed database with blockchain oracle data of the production process,
- determining (231) a pre-product status of the production process of the pre-product by comparing the pre-product planning data stored on the sequential distributed database with blockchain oracle data of the production process, and
- validating (240) the product status with respect to the pre-product status, wherein the validation comprises comparing the product status with the pre-product status and determining which of the production entities has fulfilled its production plan with respect to the one or more aspects, and
- outputting the validation for controlling the production process and pre-production process.

2. The method according to claim 1, wherein the method further comprises generating (250) control data for controlling a production process of the product and/or pre-product based on the validation of the product status with respect to the pre-product status.

3. The method according to any of claims 1 and 2, wherein the validating of the product status with respect to the pre-product status comprises determining a balance between the product status and the pre-product status.

4. The method according to claim 3, wherein the validating of the product status with respect to the pre-product status further comprises distributing validation tokens to the production entities based on the balance.

5. The method according to claim **4,** wherein the distributing of validation tokens comprises adding tokens to a token score of a production entity if the balance indicates that the product status or pre-product status of the production entity fulfils the production or pre-production plan less than the other entity.

6. The method according to any of the preceding claims, wherein the sequential distributed database further comprises at least one of the following characteristics append-only, immutable, tamper evident and tamper resistant.

7. The method according to any of the preceding claims, wherein the sequential distributed database refers to a blockchain database.

8. The method according to any of the preceding claims, wherein the product planning data and the pre-product planning data refer to a planned reduction of a resource utilized in the production process and/or to a reduction of waste products generated during the production process.

9. The method according to any of the preceding claims, wherein the product and pre-product planning data are stored in form of a chemical product passport comprising a decentral identifier identifying the product and/or pre-product and the product planning data and/or pre-product planning data.

10. The method according to any of the preceding claims, wherein the one or more aspects relate to a decrease in the consumption of one or more resources and/or to a decrease in a waste production.

11. The method according to any of the preceding claims,
wherein the product planning data relates to reducing a CO₂ production during the production of the product compared with previous production processes of the same product and/or
wherein the product planning data relates to a reduction of the use of certain plastic materials in the production of the product and/or
wherein the product planning data relates to a certain amount of a pre-product that should be consumed during the production process.

12. The method according to any of the preceding claims,
wherein validation of the product status with respect to the pre-product status is performed with respect to one or more rules for the validation and/or
wherein rules for the validation of the product status with respect to the pre-product status are determined depending on the respective product and pre-product and the respective application context.

13. An apparatus (110) for planning of a production process, wherein the production process refers to the production of a product based on a pre-product, wherein the pre-product and the product are produced by different production entities, wherein the apparatus comprises:
- an input unit (111) configured to
a) providing product planning data for the product with respect to the production entity producing the product, wherein the product planning data is indicative of one or more aspects of a production plan of the product that should be fulfilled during the production process of the product,
b) providing pre-product planning data for the pre-product with respect to the production entity producing the pre-product, wherein the pre-product planning data is indicative of one or more aspects of a production plan of the pre-product that should be fulfilled during the production process of the pre-product,
- one or more processors (112) configured to
a) storing the product planning data and the pre-product planning data on a sequential distributed database,
b) determining a product status of the production process of the product by comparing the product planning data stored on the sequential distributed database with blockchain oracle data of the production process,
c) determining a pre-product status of the production process of the pre-product by comparing the pre-product planning data stored on the sequential distributed database with blockchain oracle data of the production process, and
d) validating the product status with respect to the pre-product status, wherein the validation comprises comparing the product status with the pre-product status and determining which of the production entities has fulfilled its production plan with respect to the one or more aspects, and
- an output unit (113) configured to output the validation for controlling the production process and pre-production process.

14. The apparatus according to claim 10,
wherein the product and/or pre-product planning data are stored in form of a chemical product passport, wherein the chemical product passport comprises a digital representation of product and/or pre-product planning data, wherein the digital representation includes a representation for accessing the product and/or pre-product planning data or part thereof and/or
wherein the data related to the product and/or pre-product planning data includes the digital representation related to the product and/or pre-product planning data.

15. A computer program product for planning of a production process, wherein the computer program product comprises program code means for causing the apparatus of any of claims 13 and 14 to execute the method according to any of claims 1 to 12.

## Patentansprüche

1. Ein computerimplementiertes Verfahren (200) zur Planung eines Produktionsprozesses, wobei sich der Produktionsprozess auf die Herstellung eines Produkts auf Basis eines Vorprodukts bezieht, wobei das Vorprodukt und das Produkt von verschiedenen Produktionseinheiten hergestellt werden,
wobei das Verfahren umfasst:
- Bereitstellen (211) von Produktplanungsdaten für das Produkt in Bezug auf die das Produkt herstellende Produktionseinheit, wobei die Produktplanungsdaten einen oder mehrere Aspekte eines Produktionsplans des Produkts anzeigen, die während des Produktionsprozesses des Produkts erfüllt werden sollen,
- Bereitstellen (210) von Vorprodukt-Planungsdaten für das Vorprodukt in Bezug auf die das Vorprodukt herstellende Produktionseinheit, wobei die Vorprodukt-Planungsdaten einen oder mehrere Aspekte eines Produktionsplans des Vorprodukts anzeigen, die während des Produktionsprozesses des Vorprodukts erfüllt werden sollen,
- Speichern (220) der Produktplanungsdaten und der Vorprodukt-Planungsdaten auf einer sequenziellen verteilten Datenbank,
- Bestimmen (230) eines Produktstatus des Produktionsprozesses des Produkts durch Vergleichen der auf der sequenziellen verteilten Datenbank gespeicherten Produktplanungsdaten mit Blockchain-Oracle-Daten des Produktionsprozesses,
- Bestimmen (231) eines Vorprodukt-Status des Produktionsprozesses des Vorprodukts durch Vergleichen der auf der sequenziellen verteilten Datenbank gespeicherten Vorprodukt-Planungsdaten mit Blockchain-Oracle-Daten des Produktionsprozesses, und
- Validieren (240) des Produktstatus in Bezug auf den Vorprodukt-Status, wobei die Validierung das Vergleichen des Produktstatus mit dem Vorprodukt-Status und das Bestimmen umfasst, welche der Produktionseinheiten ihren Produktionsplan in Bezug auf die einen oder mehreren Aspekte erfüllt hat, und
- Ausgeben der Validierung zur Steuerung des Produktionsprozesses und des Vorproduktionsprozesses.

2. Das Verfahren nach Anspruch 1, wobei das Verfahren ferner das Erzeugen (250) von Steuerdaten zur Steuerung eines Produktionsprozesses des Produkts und/oder Vorprodukts auf Basis der Validierung des Produktstatus in Bezug auf den Vorprodukt-Status umfasst.

3. Das Verfahren nach einem der Ansprüche 1 und 2, wobei das Validieren des Produktstatus in Bezug auf den Vorprodukt-Status das Bestimmen einer Balance zwischen dem Produktstatus und dem Vorprodukt-Status umfasst.

4. Das Verfahren nach Anspruch 3, wobei das Validieren des Produktstatus in Bezug auf den Vorprodukt-Status ferner das Verteilen von Validierungstoken an die Produktionseinheiten auf Basis der Balance umfasst.

5. Das Verfahren nach Anspruch 4, wobei das Verteilen von Validierungstoken das Hinzufügen von Token zu einem Token-Score einer Produktionseinheit umfasst, wenn die Balance anzeigt, dass der Produktstatus oder Vorprodukt-Status der Produktionseinheit den Produktions- oder Vorproduktionsplan weniger erfüllt als die andere Einheit.

6. Das Verfahren nach einem der vorhergehenden Ansprüche, wobei die sequenzielle verteilte Datenbank ferner mindestens eines der folgenden Merkmale aufweist: nur erweiterbar (append-only), unveränderlich (immutable), manipulationserkennend (tamper evident) und manipulationsresistent (tamper resistant).

7. Das Verfahren nach einem der vorhergehenden Ansprüche, wobei die sequenzielle verteilte Datenbank auf eine Blockchain-Datenbank verweist.

8. Das Verfahren nach einem der vorhergehenden Ansprüche, wobei die Produktplanungsdaten und die Vorprodukt-Planungsdaten auf eine geplante Reduzierung einer im Produktionsprozess eingesetzten Ressource und/oder auf eine Reduzierung der während des Produktionsprozesses erzeugten Abfallprodukte verweisen.

9. Das Verfahren nach einem der vorhergehenden Ansprüche, wobei die Produkt- und Vorprodukt-Planungsdaten in Form eines chemischen Produktpasses gespeichert werden, der einen dezentralen Identifikator zur Identifizierung des Produkts und/oder Vorprodukts sowie die Produktplanungsdaten und/oder Vorprodukt-Planungsdaten umfasst.

10. Das Verfahren nach einem der vorhergehenden Ansprüche, wobei sich die einen oder mehreren Aspekte auf eine Verringerung des Verbrauchs einer oder mehrerer Ressourcen und/oder auf eine Verringerung der Abfallproduktion beziehen.

11. Das Verfahren nach einem der vorhergehenden Ansprüche,
wobei die Produktplanungsdaten auf eine Reduzierung der CO₂-Produktion während der Herstellung des Produkts im Vergleich zu früheren Produktionsprozessen desselben Produkts beziehen und/oder
wobei die Produktplanungsdaten auf eine Reduzierung des Einsatzes bestimmter Kunststoffmaterialien bei der Herstellung des Produkts beziehen und/oder
wobei die Produktplanungsdaten auf eine bestimmte Menge eines Vorprodukts beziehen, die während des Produktionsprozesses verbraucht werden soll.

12. Das Verfahren nach einem der vorhergehenden Ansprüche,
wobei die Validierung des Produktstatus in Bezug auf den Vorprodukt-Status in Bezug auf eine oder mehrere Regeln für die Validierung durchgeführt wird und/oder
wobei Regeln für die Validierung des Produktstatus in Bezug auf den Vorprodukt-Status in Abhängigkeit vom jeweiligen Produkt und Vorprodukt sowie dem jeweiligen Anwendungskontext bestimmt werden.

13. Eine Vorrichtung (110) zur Planung eines Produktionsprozesses, wobei sich der Produktionsprozess auf die Herstellung eines Produkts auf Basis eines Vorprodukts bezieht, wobei das Vorprodukt und das Produkt von verschiedenen Produktionseinheiten hergestellt werden, wobei die Vorrichtung umfasst:
- eine Eingabeeinheit (111), die konfiguriert ist zum
a) Bereitstellen von Produktplanungsdaten für das Produkt in Bezug auf die das Produkt herstellende Produktionseinheit, wobei die Produktplanungsdaten einen oder mehrere Aspekte eines Produktionsplans des Produkts anzeigen, die während des Produktionsprozesses des Produkts erfüllt werden sollen,
b) Bereitstellen von Vorprodukt-Planungsdaten für das Vorprodukt in Bezug auf die das Vorprodukt herstellende Produktionseinheit, wobei die Vorprodukt-Planungsdaten einen oder mehrere Aspekte eines Produktionsplans des Vorprodukts anzeigen, die während des Produktionsprozesses des Vorprodukts erfüllt werden sollen,
einen oder mehrere Prozessoren (112), die konfiguriert sind zum
a) Speichern der Produktplanungsdaten und der Vorprodukt-Planungsdaten auf einer sequenziellen verteilten Datenbank,
b) Bestimmen eines Produktstatus des Produktionsprozesses des Produkts durch Vergleichen der auf der sequenziellen verteilten Datenbank gespeicherten Produktplanungsdaten mit Blockchain-Oracle-Daten des Produktionsprozesses,
c) Bestimmen eines Vorprodukt-Status des Produktionsprozesses des Vorprodukts durch Vergleichen der auf der sequenziellen verteilten Datenbank gespeicherten Vorprodukt-Planungsdaten mit Blockchain-Oracle-Daten des Produktionsprozesses, und
d) Validieren des Produktstatus in Bezug auf den Vorprodukt-Status, wobei die Validierung das Vergleichen des Produktstatus mit dem Vorprodukt-Status und das Bestimmen umfasst, welche der Produktionseinheiten ihren Produktionsplan in Bezug auf die einen oder mehreren Aspekte erfüllt hat, und
- eine Ausgabeeinheit (113), die konfiguriert ist, die Validierung zur Steuerung des produktions prozesses und des Vorproduktionsprozesses auszugeben.

14. Die Vorrichtung nach Anspruch 10,
wobei die Produkt- und/oder Vorprodukt-Planungsdaten in Form eines chemischen Produktpasses gespeichert werden, wobei der chemische Produktpass eine digitale Darstellung von Produkt- und/oder Vorprodukt-Planungsdaten umfasst, wobei die digitale Darstellung eine Darstellung für den Zugriff auf die Produkt- und/oder Vorprodukt-Planungsdaten oder Teile davon umfasst und/oder
wobei die Daten in Bezug auf die Produkt- und/oder Vorprodukt-Planungsdaten die digitale Darstellung in Bezug auf die Produkt- und/oder Vorprodukt-Planungsdaten umfassen.

15. Ein Computerprogrammprodukt zur Planung eines Produktionsprozesses, wobei das Computerprogrammprodukt Programmcodemittel umfasst, um die Vorrichtung nach einem der Ansprüche 13 und 14 zu veranlassen, das Verfahren nach einem der Ansprüche 1 bis 12 auszuführen.

## Revendications

1. Un procédé mis en œuvre par ordinateur (200) pour la planification d'un processus de production, dans lequel le processus de production se réfère à la production d'un produit à partir d'un pré-produit, dans lequel le pré-produit et le produit sont produits par différentes entités de production, dans lequel le procédé comprend:
- la fourniture (211) de données de planification de produit pour le produit par rapport à l'entité de production produisant le produit, dans lequel les données de planification de produit indiquent un ou plusieurs aspects d'un plan de production du produit qui doivent être respectés pendant le processus de production du produit,
- la fourniture (210) de données de planification de pré-produit pour le pré-produit par rapport à l'entité de production produisant le pré-produit, dans lequel les données de planification de pré-produit indiquent un ou plusieurs aspects d'un plan de production du pré-produit qui doivent être respectés pendant le processus de production du pré-produit,
- le stockage (220) des données de planification de produit et des données de planification de pré-produit sur une base de données distribuée séquentielle,
- la détermination (230) d'un statut de produit du processus de production du produit en comparant les données de planification de produit stockées sur la base de données distribuée séquentielle avec des données d'oracle de blockchain du processus de production,
- la détermination (231) d'un statut de pré-produit du processus de production du pré-produit
en comparant les données de planification de pré-produit stockées sur la base de données distribuée séquentielle avec des données d'oracle de blockchain du processus de production, et
- la validation (240) du statut de produit par rapport au statut de pré-produit, dans lequel la validation comprend la comparaison du statut de produit avec le statut de pré-produit et la détermination de laquelle des entités de production a respecté son plan de production par rapport aux un ou plusieurs aspects, et
- la sortie de la validation pour contrôler le processus de production et le processus de pré-production.

2. Le procédé selon la revendication 1, dans lequel le procédé comprend en outre la generation (250) de données de contrôle pour contrôler un processus de production du produit et/ou du pré-produit sur la base de la validation du statut de produit par rapport au statut de pré-produit.

3. Le procédé selon l'une quelconque des revendications 1 et 2, dans lequel la validation du statut de produit par rapport au statut de pré-produit comprend la détermination d'un équilibre entre le statut de produit et le statut de pré-produit.

4. Le procédé selon la revendication 3, dans lequel la validation du statut de produit par rapport au statut de pré-produit comprend en outre la distribution de jetons de validation aux entités de production sur la base de l'équilibre.

5. Le procédé selon la revendication 4, dans lequel la distribution de jetons de validation comprend l'ajout de jetons au score de jetons d'une entité de production si l'équilibre indique que le statut de produit ou le statut de pré-produit de l'entité de production respecte le plan de production ou de pré-production moins que l'autre entité.

6. Le procédé selon l'une quelconque des revendications précédentes, dans lequel la base de données distribuée séquentielle comprend en outre au moins l'une des caractéristiques suivantes : ajout uniquement, immuable, résistante à la falsification évidente et résistante à la falsification.

7. Le procédé selon l'une quelconque des revendications précédentes, dans lequel la base de données distribuée séquentielle se réfère à une base de données blockchain.

8. Le procédé selon l'une quelconque des revendications précédentes, dans lequel les données de planification de produit et les données de planification de pré-produit se réfèrent à une réduction planifiée d'une ressource utilisée dans le processus de production et/ou à une réduction des déchets générés pendant le processus de production.

9. Le procédé selon l'une quelconque des revendications précédentes, dans lequel les données de planification de produit et de pré-produit sont stockées sous la forme d'un passeport de produit chimique comprenant un identifiant central identifiant le produit et/ou le pré-produit ainsi que les données de planification de produit et/ou les données de planification de pré-produit.

10. Le procédé selon l'une quelconque des revendications précédentes, dans lequel le ou les aspects se rapportent à une diminution de la consommation d'une ou plusieurs ressources et/ou à une diminution de la production de déchets.

11. Le procédé selon l'une quelconque des revendications précédentes,
dans lequel les données de planification de produit se rapportent à la réduction de la production de CO₂ pendant la production du produit par rapport aux processus de production antérieurs du même produit et/ou
dans lequel les données de planification de produit se rapportent à une réduction de l'utilisation de certains matériaux plastiques dans la production du produit et/ou
dans lequel les données de planification de produit se rapportent à une certaine quantité d'un pré-produit qui doit être consommée pendant le processus de production.

12. Le procédé selon l'une quelconque des revendications précédentes,
dans lequel la validation du statut de produit par rapport au statut de pré-produit est effectuée par rapport à une ou plusieurs règles de validation et/ou
dans lequel les règles de validation du statut de produit par rapport au statut de pré-produit sont déterminées en fonction du produit et du pré-produit respectifs et du contexte d'application respectif.

13. Un appareil (110) pour la planification d'un processus de production, dans lequel le processus de production se réfère à la production d'un produit à partir d'un pré-produit, dans lequel le pré-produit et le produit sont produits par différentes entités de production, dans lequel l'appareil comprend :
- une unité d'entrée (111) configurée pour
a) fournir des données de planification de produit pour le produit par rapport à l'entité de production produisant le produit, dans lequel les données de planification de produit indiquent un ou plusieurs aspects d'un plan de production du produit qui doivent être respectés pendant le processus de production du produit,
b) fournir des données de planification de pré-produit pour le pré-produit par rapport à l' entité de production produisant le pré-produit, dans lequel les données de planification de pré-produit indiquent un ou plusieurs aspects d'un plan de production du pré-produit qui doivent être respectés pendant le processus de production du pré-produit,
- un ou plusieurs processeurs (112) configurés pour
a) stocker les données de planification de produit et les données de planification de pré-produit sur une base de données distribuée séquentielle,
b) déterminer un statut de produit du processus de production du produit en comparant les données de planification de produit stockées sur la base de données distribuée séquentielle avec des données d'oracle de blockchain du processus de production,
c) déterminer un statut de pré-produit du processus de production du pré-produit en comparant les données de planification de pré-produit stockées sur la base de données distribuée séquentielle avec des données d'oracle de blockchain du processus de production, et
d) valider le statut de produit par rapport au statut de pré-produit, dans lequel la validation comprend la comparaison du statut de produit avec le statut de pré-produit et la détermination de laquelle des entités de production a respecté son plan de production par rapport au ou aux aspects, et
- une unité de sortie (113) configurée pour sortir la validation pour contrôler le processus de production et le processus de pré-production.

14. L'appareil selon la revendication 10,
dans lequel les données de planification de produit et/ou de pré-produit sont stockées sous la forme d'un passeport de produit chimique, dans lequel le passeport de produit chimique comprend une représentation numérique des données de planification de produit et/ou de pré-produit, dans lequel la représentation numérique inclut une représentation pour accéder aux données de planification de produit et/ou de pré-produit ou à une partie de celles-ci et/ou
dans lequel les données relatives aux données de planification de produit et/ou de pré-produit incluent la représentation numérique relative aux données de planification de produit et/ou de pré-produit.

15. Un produit de programme informatique pour la planification d'un processus de production, dans lequel le produit de programme informatique comprend des moyens de code de programme pour amener l'appareil selon l'une quelconque des revendications 13 et 14 à exécuter le procédé selon l'une quelconque des revendications 1 à 12.
